# EUROPEAN PATENT SPECIFICATION

(11) **EP 1 340 426 B1**
(45) Date of publication and mention of the grant of the patent: **03.01.2007**
(21) Application number: 03004325.1
(22) Date of filing: 27.02.2003
(51) Int. Cl.: A22C 7/00

(54) **Device for the preparation of food products.**
Vorrichtung zur Herstellung von Lebensmitteln
Appareil de fabrication d'un produit alimentaire

(30) Priority: 27.02.2002 IT PD20020050
(43) Date of publication of application: 03.09.2003
(73) Proprietor: Borgo, Antonio, 36016 Thiene (VI) (IT)
(72) Inventor: Borgo, Antonio, 36016 Thiene (VI) (IT)
(74) Representative: Grünecker, Kinkeldey, Stockmair & Schwanhäusser Anwaltssozietät

(56) References cited:
- FR-A- 2 491 734
- FR-A- 2 538 223
- US-A- 4 052 836

## Description

### TECHNICAL FIELD OF THE PRESENT INVENTION

The present invention relates to the preparation of food products. In particular, the present invention relates to a device for the preparation of food products containing meat. In more detail, the present invention relates to a device for the preparation of food products, such as for example, meat cakes, hamburger or the like.

### DESCRIPTION OF THE PRIOR ART

In the following, a brief description will be given of prior art devices for the preparation and/or production of food products, in particular for the preparation of food products containing meat.

Devices and/or apparatuses for the preparation and formation of food products are known, comprising essentially a main body provided with a cylindrical seat and/or cavity, with said cavity receiving a forming drum adapted to be rotated on its own axis by means of driving means adapted to this scope, for instance, by means of an electrical motor. The main body is also provided with an inlet aperture and an outlet aperture disposed diametrically opposed to each other. By means of said inlet and outlet apertures the interior of the cylindrical cavity communicates with the exterior of the device. In the same way, the rotating drum is provided with a passageway disposed parallel to the diameter of the rotating drum. When a rotational motion is given to the drum, the passageway is adapted to be placed in alignment with the outlet and the inlet aperture of the main body. Forming means are received within the passageway of the drum, with said forming means being adapted to be reciprocated within the passageway. The inlet aperture of the main body is adapted to be connected to the pipe of a processing machine by means of which a pasty of meat is prepared. Through the outlet aperture, which is disposed diametrically opposed to the inlet aperture, a predefined portion of the pasty is discharged to the exterior of the device, for instance, on a conveyor belt and sent to the packaging. The rotating drum is rotated step by step, with each rotating step resulting in a semi-rotation being accomplished by the drum. In particular, at each rotating step the passageway is placed into alignment with the outlet and the inlet apertures of the main body. Once the passageway has been disposed into alignment with the outlet and inlet apertures the forming means within the passageway are disposed in a back position with respect to the inlet aperture, so that the passageway can be filled with a predefined portion of the meat pasty. Once the passageway has been filled the drum is rotated so as to dispose once again the passageway in alignment with the outlet and the inlet apertures. By introducing a second predefined portion of the meat pasty the forming means are displaced so that the first portion of meat pasty previously filled into the passageway is discharged and the passageway is filled again with said second portion of meat pasty.

The main drawback affecting the device disclosed above relates to the fact that, at the end of operation, a portion of meat pasty remains trapped within the outlet aperture of the main body through with the food products are discharged. Accordingly, since the trapped meat pasty deteriorates and becomes rancid and loses the quality characteristics desired by the customers the need arises of removing the trapped meat pasty before proceeding with preparing new food products. To this end, however, the main body must be disassembled. This operation is quite time consuming resulting in the overall preparation time being elongated and in the preparation costs being increased.

A further drawback relates to the fact that the known device allows the preparation of only food products having a shape substantially elongated such as for example sausages or the like. On the contrary, the known device is not suitable for preparing food products having a shape substantially flat, such as for example, meat cakes and/or hamburgers.

A further drawback relates to the fact that the quality characteristics of the food products as prepared cannot be maintained constant during the time. In fact, problems arise when the predefined portions of meat pasty forming the finished food products are separated from the device and discharged, for instance on a conveyor belt. In particular, slobbers or slavers are formed when the food products are discharged so that their shape often does not correspond to the final shape desired.

Finally, the forming means and the passageway have cross dimensions larger than the cross dimension of the outlet aperture of the main body, otherwise the forming means could be displaced till entering into the outlet aperture. The meat pasty is therefore compressed and/or squeezed by the forming means when it is pushed into the outlet aperture. However, the arising friction force causes a thin layer of fat to be formed on the outer surface of the finished products, with said lay of fat conferring to the products a whitish look which is usually disliked by the customers.

An example of a device for preparing food products may also be found in document FR-A-2491734, wherein there is disclosed a device comprising a rotating body and a forming body adapted to be reciprocated inside said rotating body.

A further device for preparing food products is known from document FR-A-2538223, with said device being further adapted for packaging said food products.

There is also known from document US-A-4052836 a device for the preparation of food products, wherein the foods are first placed in a chopper and caused to gravitate into pockets on the outer periphery of a rotating drum above a conveyer carrying a number of open packages.

Accordingly, in view of the problems explained above, it should be desirable to provide a device for the preparation and/or formation of food products that may solve or at least reduce one or more of these problems.

### SUMMARY OF THE PRESENT INVENTION

In general, the present invention is directed to a device or apparatus for the preparation of food products, in particular, food products containing meat, allowing food products to be prepared having a substantially flat shape, such as for example meat cakes and hamburgers.

In particular, the device according to the present invention allows the preparation of food products having shape, dimensions and weight which are kept constant during the overall production cycle, during which even thousands of pieces are prepared.

Moreover, the device according to the present invention at the end of a production cycle is left perfectly empty and free from residuals of the products. Accordingly, there is no need of removing said residuals of products remaining trapped within the device, resulting in a substantial reduction of the time of preparation and of the processing costs as well.

A further advantage of the device according to the present invention relates to the fact that the discharging step of the food products is simplified, so that there is no need of using means and/or tools specially adapted to this end such as for example, knives, blades and/or strings or the like for discharging the prepared food products, for instance on a conveyor belt.

Finally, in the device according to the present invention, the pasty processed during preparation of the food products, for instance a pasty containing meat is not compressed and/or squeezed during the preparation of the food products, so that the quality characteristics of the final products such as, for example, a consistent look, or the like are kept constant during the time so as to correspond to the expectancies of the consumers.

To this end, according to a first embodiment, the present invention relates to a device for the preparation of food products as claimed in claim 1.

According to other preferred embodiments, the present invention relates to devices for the preparation of food products as claimed in the dependent claims.

### BRIEF DESCRTIPTION OF THE DRAWINGS:

Further advantages, objects and features as well as embodiments of the present invention will become more apparent with the following detailed description when taken with reference to the accompanying drawings in which identical or corresponding parts are identified by the same reference numerals. In particular, in the drawings:
Figure 1 relates to a side view of the device according to the present invention connected to a processing machine for processing a pasty. Moreover, in Figure 1 there is depicted a conveyor belt for transporting the final products to the packaging.
In Figure 2 there is depicted a front view of the device and the conveyor belt of Figure 1.
Figure 3 relates to a detailed front view of the device.
Figure 4 relates to a cross-sectional view taken along the line IV-IV of Figure 3.
Figures 5, 6,7 and 8 represent a process sequence for preparing food products with the device according to the present invention.

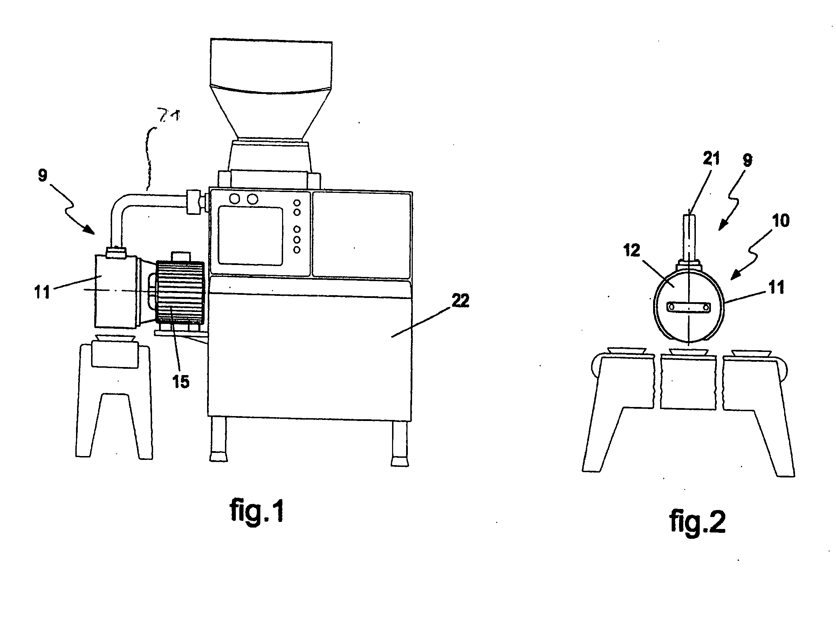

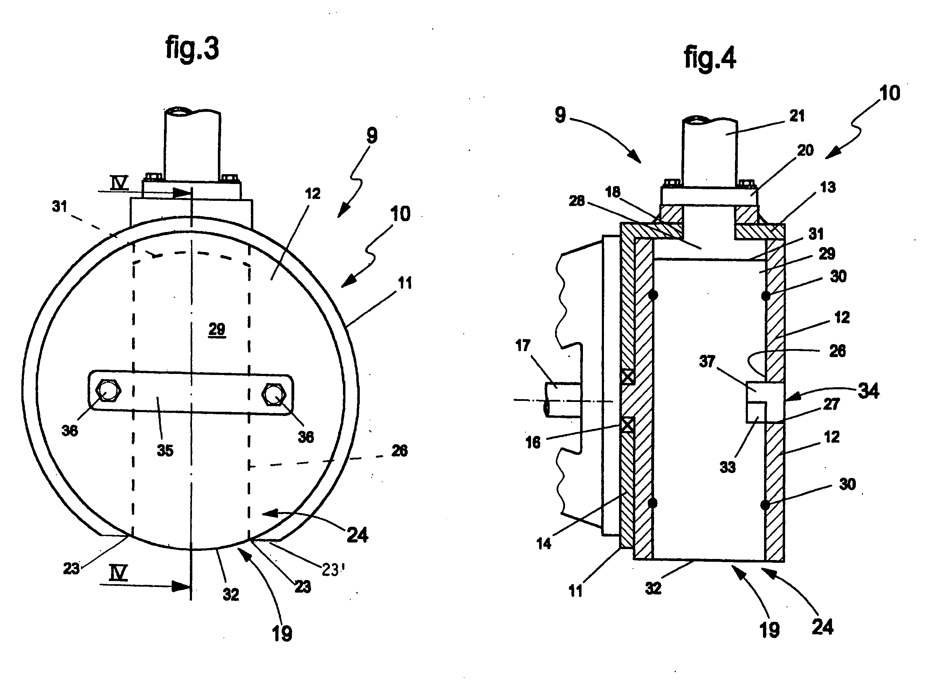

In Figure 1 there is depicted a processing machine 22 for processing and/or working a pasty, for instance a pasty containing meat. Said pasty is used for preparing food products having predefined shape, dimensions and weight. To this end, the machine 22 is connected by means of a pipe 21 to a device for the preparation of said food products. In particular, said device is identified in the drawings with the reference numeral 9 and is driven by means adapted to this end, for instance by means of an electrical motor 15 and comprises operating means 10 adapted to be at least partially rotated (see Figure 2). Said operating means comprise an external body or jacket 11, wherein a cylindrical internal cavity is formed, with said cavity being adapted to receive a rotating body 12, for instance a drum shaped body (see Figures 2 and 3).

The external jacket 11 comprises an annular wall 13 and a back wall 14 to which an electrical motor 15 may be applied (see Figure 4). It has however to be noted that the external jacket 11 may have different shapes. For instance, the annular wall may be substituted by a body having substantially a parallelepiped shape, wherein an internal cavity is formed, with said cavity being defined by an internal cylindrical surface and by a back surface substantially circular. As depicted in Figure 4, a central hole is formed in the back wall 14, with said central hole being adapted to receive a bearing 16 into which the transmission shaft 17 of an electrical motor 15 may be inserted. Moreover, the jacket 11 comprises an inlet aperture 18 through which the meat pasty may be inserted into the device and an outlet aperture 19 for discharging the products prepared with the device (see Figure 4). The inlet aperture 18 is connected to the pipe 21 of the machine 22 by means of a flange 20. The outlet aperture 19 comprises edges 23 having the shape of a blade or a knife, with said edges 23 allowing the food products to be easily separated from the operating means 10 and thus discharged. It has further to be noted that the outlet aperture 19 is formed on the lower external surface 23' of the jacket 11. Thanks to this particular assembly, the portion of the drum 12 (or, as it will be described in the following, the portion of the forming means) in correspondence of the outlet aperture 19 projects through the outlet aperture 19 beyond the external surface 23'. In this way, the separation of the food products from the drum is simplified as it will become more apparent with the following description. Moreover, the problem is avoided that residuals or rest of the meat pasty remain trapped within the external jacket 11. The operating means 10 are adapted to receive forming means 24 which will be described below. The body 12 having a drum or cylindrical shape, is adapted to being rotated on its longitudinal axis. The body 12 is rigidly connected with the driving shaft 17 of the motor 15. The rotating cylindrical body 12 comprises a passageway 26, for instance a cylindrical passageway, with said passageway being disposed perpendicularly with respect to the axis of rotation of the body 12. Said passageway 26 is adapted to receive forming means 24. Moreover, said cylindrical body or drum 12 comprises a slot 27 formed in a position opposed to the back wall 14 and substantially in alignment with the longitudinal axis of rotation of the body 12. Said slot 27 communicates with the cavity 26 and is adapted to receive limiting means (described below) adapted to limit the reciprocating motion of the forming means 24. Said forming means 24 comprise essentially a displaceable body 24 received within the passageway 26, with said body 24 being adapted to be translated and/or reciprocated within the passageway between two end positions as it will be described in detail in the following. The external shape of the displaceable body 24 substantially corresponds to the internal shape of the passageway 26. That is, when the passageway has a cylindrical shape, also the body 24 has a cylindrical shape and the external dimensions of the body 24 substantially correspond to the internal dimensions of the passageway 26. In this way, the problem is avoided that little portions of the meat pasty may enter the space between the body 24 and the internal surface of the passageway 26. The fact that the body 24 may be reciprocated within the passageway 26 allows a forming chamber to be defined within the passageway by rotating the drum 12. This forming chamber is identified in the Figures with the reference numeral 28 and represents the space within the passageway wherein the food products are formed as it will become apparent in the following. Moreover, the fact that the body 24 may be displaced within the passageway 26 allows the food products formed within the forming chamber 28 to be displaced within the passageway 26 to a discharging position from which the food products are discharged when the rotating drum is rotated.

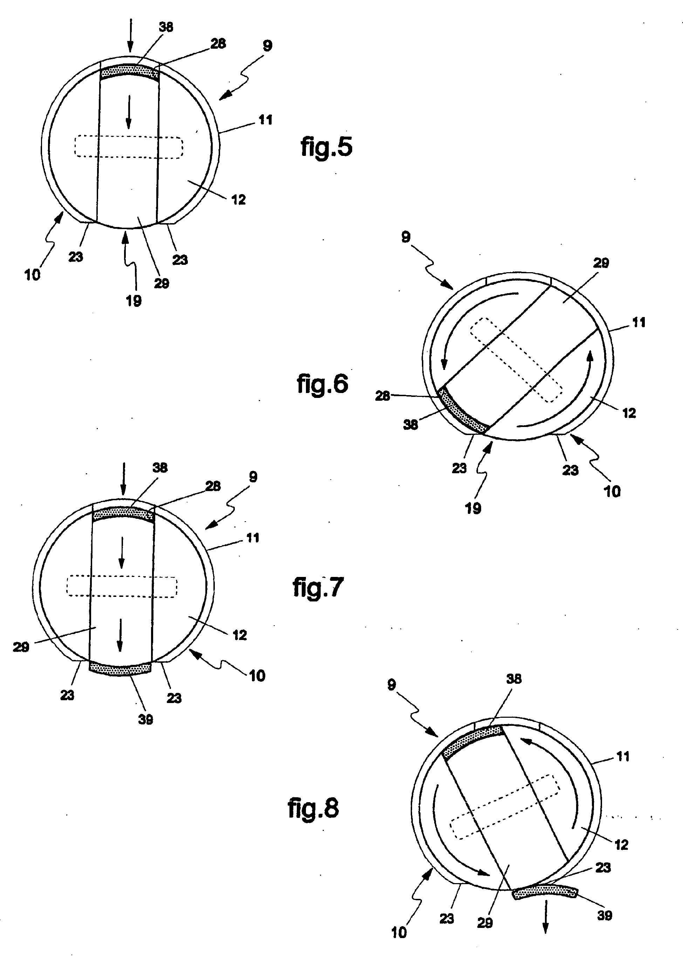

According to the embodiment depicted in the Figures, the displaceable body 24 consists essentially of a cylindrical crop or insert 29 received within the passageway 26. In proximity of both the inlet aperture 18 and the outlet aperture 19, there are provided within the passageway 26 O-ring gaskets 30 to avoid meat pasty entering into the space between the insert 29 and the internal surface of the passageway 26. The length of the insert 29 is smaller than the diameter of the cylindrical body 12 and the diameter of the insert 29 substantially corresponds to that of the cavity 26. The end surfaces 31 and 32 of the insert 29 have the same radius of curvature of the cylindrical surface of the cylindrical body 12. It will be noted that, when the drum 12 is rotated so as to bring the passageway 26 into alignment with the inlet and outlet apertures 18 and 19 and the insert 29 is displaced to its end position within the passageway opposed to the inlet aperture 18 (see Figures 3 and 4) the end surface 32 of the insert 29 projects beyond the surface 23' of the external jacket 11 on which the outlet aperture 19 is formed. On the external cylindrical surface of the insert 29 there is formed a seat 33 having the form of a slot, substantially in correspondence of the slot 27 formed in the cylindrical body 12. When the insert 29 is in its back position within the passageway 26 opposed to the flange 20 as depicted in Figures 3 and 4, a forming chamber 28 for forming the food products is defined, with said forming chamber 28 being adapted to receive and contain a portion of the meat pasty. In particular, the lateral surface of the forming chamber 28 is defined by the internal surface of the passageway 26. The lower surface of the forming chamber 28 is defined alternatively by one of the end surfaces 31 and 32 of the insert 28, whilst the upper surface of the forming chamber 28 is defined by the portion of the annular wall 13 in proximity of the inlet aperture 18. It appears clearly that the height of the chamber 28 is defined by the difference between the diameter of the cylindrical body 12 and the length of the insert 29. The insert 29 is adapted to be reciprocated within the passageway 26; in particular, when the insert 29 is brought into alignment with the inlet and outlet apertures 18 and 19, the insert 29 is displaced by means of the pressure exerted by the meat pasty entering into the device through the inlet aperture 18. The translation of the insert 29 corresponds to the height of the forming chamber 28. A further important features relate to the fact that the displacement of the insert 29 within the passageway 26 is limited by limiting means identified in Figure 4 by the reference number 34. Said limiting means comprise a plate 35 applied to the cylindrical body 12 by means of screws 36 so as to close the slot 27. The plate 35 comprises a protrusion 37 of a thickness corresponding to the maximum height of the forming chamber 28 with said protrusion being adapted to be engaged within the slot 33 of the insert 29 so as to limit the displacement of the insert 29 to a length corresponding to the maximum height of the forming chamber 28. To this end, the height of both the slot 27 and the slot 33 corresponds to twice the height of the forming chamber 28. On the contrary, the thickness of the protrusion 27 in the direction of the passageway 26 corresponds to the height of the forming chamber 28. With reference to Figures 5, 6, 7 and 8, a description will be given in the following of the operation of the device 9. The portion of meat pasty within the forming chamber 28 is identified by the reference number 38. The product ready to be discharged from the device 8 is identified by the reference number 39. In Figure 5, there is depicted the first step, where the passageway 26 and the insert 29 received therein are brought into alignment with the inlet and outlet apertures 18 and 19 by rotating opportunely the cylindrical body or drum 12. Subsequently, a quantity and/or portion of pasty is loaded into the device 9 by means of the processing machine 22 through the pipe 21. In this way, the insert 29 is displaced to its back end position opposed to the inlet aperture 18 so that a forming chamber 28 is formed; at the same time this chamber 28 is filled with a portion 38 of pasty (Figure 5). In Figure 6 there is depicted the subsequent step, wherein the cylindrical body 12 is rotated so that the product 38 received within the forming chamber 28 is brought into alignment with the outlet aperture 19. In Figure 7, a subsequent step is depicted during which another quantity and/or portion of meat pasty is inserted into the device. In this way, the entering pasty displaces the insert 29 once again so that the product 38 is brought into the discharge position in proximity of the outlet aperture 19. In the meantime, a forming chamber 28 is defined once again which is filled with new pasty so that a new product 38 is formed. In Figure 8, there is depicted the final step during which the cylindrical body 12 is rotated. It will be noted that the blade edges 23 of the outlet aperture 19 will separate the product 39 from the rotating drum 11. The sequence as depicted above can therefore be repeated by starting with the operating step depicted in Figure 6.

In view of the dimension and shape of each component parts, the device according to the present invention is particularly suitable for the preparation of food products having a flat shape such as for example meat cakes and/or hamburgers. In fact, as apparent from the drawings, the length of the insert 29 is only slightly smaller than the diameter of the drum 12. In this way, a forming chamber is defined, the planar dimension of which are predominant with respect to the vertical dimensions i.e., the height of the chamber.

It has been verified that the device according to the present invention allows the desired goals to be achieved and the drawbacks affecting the prior art devices to be overcome. In fact, since the meat pasty is introduced into the forming chamber under pressure, food products may be formed, the weight, the shape and the colors of which are kept constant during an overall production cycle. Moreover, since the meat pasty is introduced under pressure within the device, said pasty does not come into contact with the air so that said pasty is not damaged and/or deteriorated. The device allows also to avoid the problem of a layer of fat appearing at the surface of the products as prepared since the meat pasty is not subjected to friction within the device as it is the case with the devices according to the prior art. Moreover, the productions rates are improved with respect to the productions rates offered by the devices according to the prior art since the forming means of the device according to the present invention do not comprise mechanical devices. Furthermore, the device according to the present invention allows to simplify the discharging operation of the products from the device, so that the products as prepared present a uniform shape as well as uniform dimensions. In the device according to the present invention no residuals of pasty remain trapped within the device at the end of the operation so that there is no need of removing said residual before beginning a new preparation cycle. Finally, the device according to the present invention may be used for the production of several products containing both meat and/or other ingredients. In particular, it is possible to prepare products containing more than one ingredient such as for example cakes containing an internal core of fromage and an external portion of, for instance vegetables and/or mushrooms. In this case, the pipe 21 comprises an internal and an external pipe, with said internal and external pipe being coaxially disposed. The internal pipe may be used for loading the fromage whilst the external pipe may be used for loading vegetables and/or mushrooms. Finally, the device according to the present invention allows preparing food products having different shapes and/or dimensions. In fact, by substituting the rotating body and the forming means, it will be possible to obtain products having different thickness and diameters as well as products having a shape other than cylindrical.

While the present invention is described with reference to the embodiments as illustrated in the above detailed description as well as in the drawings, it should be understood that the above detailed description as well as the drawings are not intended to limit the present invention to the particular illustrative embodiments disclosed, but rather that the described illustrative embodiments may examplify various aspects of the present invention, the scope of which is defined by the appended claims.

## Claims

1. A device (9) for the preparation of food products comprising a main body (11), a rotating body (12) received in a cylindrical cavity of the main body (11), with said main body (11) being provided with an inlet aperture (18) for the insertion into the device of a pasty for the preparation of food products and an outlet (19) for discharging said food products, said rotating body being provided with a passageway (26) wherein there is received a forming body (24) adapted to be reciprocated within the passageway (26), said device (9) being
**characterized in that**
said main body (11) comprises an annular wall (13) with an internal cylindrical surface defining said cylindrical cavity and an external surface (23'), **in that** said outlet aperture (19) is formed on said external surface (23') of said main body and comprises edges (23) defined by said external and internal surfaces and having the shape of a blade or knife;
and **in that** the rotating body, in correspondence of said outlet aperture (19) projects to the exterior of the device beyond said external surface (23');
so that said edges (23) allow the food products to be easily discharged.

2. A device according to claim 1,
**characterized in that**
said rotating body (12) comprises a body having substantially the shape of a drum coaxially inserted into said jacket (11).

3. A device according to claim 1,
**characterized in that**
said main body comprises a back wall (14), with said back wall (14) comprising a central hole adapted to receive at least one bearing (16) into which the driving shaft (17) of driving means may be inserted.

4. A device according to one of more of the preceding claims,
**characterized in that**
said inlet aperture (18) is adapted to be connected to a pipe (21) of a processing machine (22) adapted to process a pasty by means of a flange (20).

5. A device according to one of more of the preceding claims,
**characterized in that**
said rotating body (12) is rotated about its longitudinal axis.

6. A device according to one of more of the preceding claims,
**characterized in that**
said rotating body comprises means (37) cooperating with means (33) of the forming body for limiting the displacement of said forming body within the passageway.

7. A device according to one of more of the preceding claims,
**characterized in that**
said forming body (24) comprises a cylindrical insert (29), the length of which is smaller than the diameter of the rotating body (12) and **in that** said cylindrical insert comprises opposed surfaces (31) and (32), the radius of curvature of which corresponds to that of the rotating body.

8. A device according to claim 7,
**characterized in that**
a forming chamber (28) is defined by the internal surface of the passageway (26), alternatively by one of said end surfaces (31, 32) and by the portion of the annular wall (13) in proximity of the inlet aperture (18).

9. A device according to claim 8,
**characterized in that**
the height of the forming chamber is defined by the difference between the length of the forming body (24) and the diameter of the rotating body (12).

## Patentansprüche

1. Vorrichtung (9) für die Herstellung von Lebensmittelerzeugnissen, die einen Hauptkörper (11) und einen sich drehenden Körper (12) umfasst, der in einem zylindrischen Hohlraum des Hauptkörpers (11) aufgenommen ist, wobei der Hauptkörper (11) mit einer Einlassöffnung (18) zum Einführen einer Paste für die Herstellung von Lebensmittelerzeugnissen in die Vorrichtung sowie mit einem Auslass (19) zum Ausstoßen der Lebensmittelerzeugnisse versehen ist und der sich drehende Körper mit einem Durchlass (26) versehen ist, in dem ein formender Körper (24) aufgenommen ist, der zur Hin- und Herbewegung in dem Durchlass (26) eingerichtet ist, und die Vorrichtung (9) **dadurch gekennzeichnet ist, dass**
der Hauptkörper (11) eine ringförmige Wand (13) mit einer inneren zylindrischen Fläche, die den zylindrischen Hohlraum bildet, und einer Außenfläche (23') umfasst, **dadurch**, dass die Auslassöffnung (19) an der Außenfläche (23') des Hauptkörpers ausgebildet ist und Kanten (23) umfasst, die durch die äußere und die innere Fläche gebildet werden und die Form einer Klinge oder eines Messers haben;
und **dadurch,** dass der sich drehende Körper der Auslassöffnung (19) entsprechend zur Außenseite der Vorrichtung über die äußere Fläche (23') hinaus vorsteht;
so dass die Kanten (23) einfaches Ausstoßen der Lebensmittelerzeugnisse zulassen.

2. Vorrichtung nach Anspruch 1,
**dadurch gekennzeichnet, dass**
der sich drehende Körper (12) einen Körper umfasst, der im Wesentlichen die Form einer Trommel hat, die koaxial in die Verkleidung (11) eingeführt ist.

3. Vorrichtung nach Anspruch 1,
**dadurch gekennzeichnet, dass**
der Hauptkörper eine Rückwand (14) umfasst, wobei die Rückwand (14) ein Mittelloch umfasst, das zum Aufnehmen wenigstens eines Lagers (16) eingerichtet ist, in das die Antriebswelle (17) einer Antriebseinrichtung eingeführt werden kann.

4. Vorrichtung nach einem der vorangehenden Ansprüche,
**dadurch gekennzeichnet, dass**
die Einlassöffnung (18) zur Verbindung mit einem Rohr (21) einer Verarbeitungsmaschine (22), die zur Verarbeitung einer Paste eingerichtet ist, mittels eines Flansches (20) eingerichtet ist.

5. Vorrichtung nach einem oder mehreren der vorangehenden Ansprüche,
**dadurch gekennzeichnet, dass**
der sich drehende Körper (12) um seine Längsachse herum gedreht wird.

6. Vorrichtung nach einem oder mehreren der vorangehenden Ansprüche,
**dadurch gekennzeichnet, dass**
der sich drehende Körper eine Einrichtung (37) umfasst, die mit einer Einrichtung (33) des formenden Körpers zusammenwirkt, um die Verdrängung des Formenkörpers in den Durchlass zu begrenzen.

7. Vorrichtung nach einem oder mehreren der vorangehenden Ansprüche,
**dadurch gekennzeichnet, dass**
der formende Körper (24) einen zylindrischen Einsatz (29) umfasst, dessen Länge kleiner ist als der Durchmesser des sich drehenden Körpers (12), und **dadurch**, dass der zylindrische Einsatz einander gegenüberliegende Flächen (31) und (32) umfasst, deren Krümmungsradius dem des sich drehenden Körpers entspricht.

8. Vorrichtung nach Anspruch 7,
**dadurch gekennzeichnet, dass**
eine formende Kammer (28) von der inneren Fläche des Durchlasses (26) abwechselnd durch eine der Endflächen (31, 32) und durch den Abschnitt der ringförmigen Wand (13) in der Nähe der Einlassöffnung (18) gebildet wird.

9. Vorrichtung nach Anspruch 8,
**dadurch gekennzeichnet, dass**
die Höhe der formenden Kammer durch den Unterschied zwischen der Länge des Formkörpers (24) und dem Durchmesser des sich drehenden Körpers (12) gebildet wird.

## Revendications

1. Dispositif (9) destiné à la fabrication de produits alimentaires comprenant un corps principal (11), un corps rotatif (12) reçu dans une cavité cylindrique du corps principal (11), avec ledit corps principal (11) étant muni d'un orifice d'admission (18) pour l'introduction dans le dispositif d'une pâte destinée à la fabrication de produits alimentaires et d'un orifice de sortie (19) pour déverser lesdits produits alimentaires, ledit corps rotatif (12) étant muni d'une voie de passage (26) dans laquelle est reçu un corps de formage (24) adapté pour un déplacement selon un mouvement de va-et-vient à l'intérieur de la voie de passage (26), ledit dispositif (9) étant
**caractérisé en ce que**
ledit corps principal (11) comprend une paroi annulaire (13) avec une surface interne cylindrique définissant ladite cavité cylindrique et une surface externe (23'), **en ce que** ledit orifice de sortie (19) est formé sur ladite surface externe (23') dudit corps principal et comprend des bords (23) définis par lesdites surfaces interne et externe et ayant la forme d'une lame ou d'un couteau ;
et **en ce que** le corps rotatif, en correspondance avec ledit orifice de sortie (19) dépasse à l'extérieur du dispositif au-delà de ladite surface externe (23') ;
de sorte que lesdits bords (23) permettent que les produits alimentaires se déversent facilement.

2. Dispositif selon la revendication 1,
**caractérisé en ce que**
ledit corps rotatif (12) comprend un corps ayant sensiblement la forme d'un tambour introduit coaxialement à l'intérieur de ladite enveloppe (11).

3. Dispositif selon la revendication 1,
**caractérisé en ce que**
ledit corps principal comprend une paroi arrière (14), avec ladite paroi arrière (14) comprenant un trou central adapté pour recevoir au moins un palier (16) dans lequel peut être introduit l'arbre d'entraînement (17) du moyen d'entraînement.

4. Dispositif selon l'une quelconque ou plusieurs des revendications précédentes,
**caractérisé en ce que**
ledit orifice d'admission (18) est adapté pour être raccordé à un conduit (21) d'une machine de traitement (22) adaptée pour traiter une pâte au moyen d'une collerette (20).

5. Dispositif selon l'une quelconque ou plusieurs des revendications précédentes,
**caractérisé en ce que**
ledit corps rotatif (12) tourne autour de son axe longitudinal.

6. Dispositif selon l'une quelconque ou plusieurs des revendications précédentes,
**caractérisé en ce que**
ledit corps rotatif (12) comprend un moyen (37) coopérant avec le moyen (33) du corps de formage permettant de limiter le déplacement dudit corps de formage à l'intérieur de la voie de passage.

7. Dispositif selon l'une quelconque ou plusieurs des revendications précédentes,
**caractérisé en ce que**
ledit corps de formage (24) comprend une pièce rapportée cylindrique (29), dont la longueur est inférieure au diamètre du corps rotatif (12) et **en ce que** ladite pièce rapportée cylindrique comprend des surfaces opposées (31) et (32), dont le rayon de courbure correspond à celui du corps rotatif.

8. Dispositif selon la revendication 7,
**caractérisé en ce que**
une chambre de formage (28) est définie par la surface interne de la voie de passage (26), en alternance par l'une ou l'autre desdites surfaces d'extrémité (31, 32) et par la partie de la paroi annulaire (13) à proximité de l'orifice d'admission (18).

9. Dispositif selon la revendication 8,
**caractérisé en ce que**
la hauteur de la chambre de formage (28) est définie par la différence entre la longueur du corps de formage (24) et le diamètre du corps rotatif (12).
